Europäisches Patentamt

European Patent Office

Office européen des brevets

(19)

(11) Veröffentlichungsnummer: **0 177 678**
**B1**

(12) # EUROPÄISCHE PATENTSCHRIFT

(45) Veröffentlichungstag der Patentschrift :
25.05.88

(51) Int. Cl.⁴ : **C 01 B 17/16**

(21) Anmeldenummer : 85108096.0

(22) Anmeldetag : 29.06.85

(54) Verfahren zur Herstellung von Schwefelwasserstoff.

(30) Priorität : 09.10.84 DE 3437010

(43) Veröffentlichungstag der Anmeldung :
16.04.86 Patentblatt 86/16

(45) Bekanntmachung des Hinweises auf die Patenterteilung : 25.05.88 Patentblatt 88/21

(84) Benannte Vertragsstaaten :
AT BE CH DE FR GB IT LI LU NL SE

(56) Entgegenhaltungen :
DE-A- 2 817 937
DE-B- 1 083 237
DE-B- 1 113 446
GB-A- 1 193 040
US-A- 1 700 578
US-A- 2 653 078
US-A- 2 876 070
US-A- 2 876 071
Ullmanns Encyklopädie der technischen Chemie, 4.
Aufl. Band 2, (1972) Seiten 367, 372

(73) Patentinhaber : Degussa Aktiengesellschaft
Weissfrauenstrasse 9
D-6000 Frankfurt am Main 1 (DE)

(72) Erfinder : Voigt, Carl, Dr. Dipl.-Chem.
Im Heegholz 5
D-6458 Rodenbach 2 (DE)
Erfinder : Reck, Reinhold, Dr. Dipl.-Ing.
Mainkurstrasse 19
D-6457 Maintal 2 (DE)
Erfinder : Bittner, Friedrich, Dr. Dipl.-Chem.
Mozartstrasse 38
D-6232 Bad Soden (DE)
Erfinder : Kleinschmit, Peter, Dr. Dipl.-Chem.
Wildaustrasse 19
D-6450 Hanau 9 (DE)

## Beschreibung

Die Erfindung betrifft ein Verfahren zur Herstellung von Schwefelwasserstoff aus den Elementen in einer Diffusionsflamme.

Es ist bekannt, Schwefelwasserstoff zu erzeugen, indem man Schwefel mit Wasserstoff bei Temperaturen von 400 bis 600 °C und Drücken von 4 bis 15 bar zur Reaktion bringt (GB-A 1 193 040). Nachteilig ist bei diesem Verfahren insbesondere die geringe Umsetzungsgeschwindigkeit.

Es ist auch bekannt, Schwefel mit Wasserstoff bei Temperaturen von 300 bis 400 °C an einem Katalysator aus Kobalt- und Molybdän-Verbindungen auf Aluminiumoxid umzusetzen (DE-B 1 113 446). Obwohl bei diesem Verfahren eine höhere Reaktionsgeschwindigkeit erzielt wird, erweist es sich als aufwendig, da ein spezieller Katalysator erforderlich ist, der nach einer gewissen Zeit ausgetauscht werden muß und nur schwer wiederaufbereitet werden kann.

Die DE-A 2 817 937 betrifft ein Verfahren zur Herstellung von Schwefelwasserstoff in der Flamme, bei dem in der ersten Flammzone einer thermischen Reaktionszone durch Partialoxidation eines Kohlenwasserstoffes ein Wasserstoff- und Kohlenmonoxid-haltiges Gas erzeugt wird, das man in einer zweiten Flammzone mit dampfförmigem Schwefel vermischt. Da die Umsetzung zu Schwefelwasserstoff nur sehr unvollständig abläuft, leitet man das Gemisch mit den noch nicht abreagierten Verbindungen in eine katalytische Umwandlungszone.

Aufgabe der Erfindung ist ein Verfahren zur Herstellung von Schwefelwasserstoff aus den Elementen, bei dem man ohne die Anwendung erhöhten Drucks oder Einsatz von Katalysatoren zu hohen Reaktionsgeschwindigkeiten und guten Produktausbeuten gelangt.

Gegenstand der Erfindung ist ein Verfahren zur druck- und katalysatorlosen Herstellung von Schwefelwasserstoff, bei dem man geschmolzenen oder gasförmigen Schwefel und Wasserstoff der Reaktionskammer voneinander getrennt in zwei koaxial angeordneten Rohren zuleitet, an deren Endöffnungen Vermischung und Umsetzung in einer Diffusionsflamme bei Temperaturen zwischen 650° und 1 300 °C simultan erfolgen und man anschließend das Reaktionsgemisch schnell abkühlt.

In einer bevorzugten Ausführungsform leitet man den Schwefel durch das innere und den Wasserstoff durch das äußere Rohr.

Das Reaktionsgemisch wird anschließend bevorzugt noch im Reaktionsraum innerhalb von 0,4 bis 20 sec. auf eine Temperatur unterhalb von 400 °C abgekühlt, bei denen nicht umgesetzter Schwefel noch flüssig ist, d. h. > 112 °C, vorteilhaft > 190 °C.

Vorteilhafterweise wählt man die längeren Abkühlzeiten für die bei höheren Reaktionstemperaturen entstandenen Gemische.

Das Reaktionsgemisch kann durch Quenchen mit einem inerten Gas, z. B. Stickstoff, am Reaktorausgang gekühlte Wandflächen oder am Reaktorende eingebaute Kühlflächen oder auch in einem zweiten angeschlossenen Reaktor abgekühlt werden.

Um Wasserstoff und Schwefel in einer Flamme umzusetzen, bedarf es einer Temperatur von wenigstens 650 °C. Es kommen aber auch Temperaturen bis 1 300 °C in Frage. Besonders geeignet ist der Bereich von 870 bis 1 200 °C, insbesondere von 1 000 bis 1 100 °C.

Zur Durchführung des erfindungsgemäßen Verfahrens werden die Ausgangssubstanzen, Schwefel und Wasserstoff im Molverhältnis von 0,8 bis 1,2 zu 1,0, vorzugsweise von 0,95 bis 1,05 zu 1,00, eingesetzt. Besonders vorteilhaft ist, die Substanzen in stöchiometrischem Verhältnis anzuwenden.

Soll ein Wasserstoffgehalt im erzeugten Schwefelwasserstoffgas vermieden werden, ist es zweckmäßig, von einem Schwefelüberschuß auszugehen. Der nicht umgesetzte Schwefel wird dann in flüssiger Form aus dem vorzugsweise senkrecht stehenden Reaktor unten abgezogen, bei dem die Reaktanten am oberen Ende eingespeist werden.

Der Schwefel wird flüssig oder vorzugsweise gasförmig zugeführt. Zur Erzielung der gewünschten Umsetzungstemperatur und Bildung der Flamme kann es erforderlich sein, den Schwefel darüber hinaus auf Temperaturen bis 600 °C vorzuwärmen. Auch kann es zweckmäßig sein, auf Temperaturen bis 1 000 °C vorgewärmten Wasserstoff anzuwenden. Vorzugsweise wird der Wasserstoff vorgeheizt auf Temperaturen von 500 bis 650 °C eingesetzt.

Mit dem erfindungsgemäßen Verfahren erzielt man Ausbeuten von mehr als 85 %, bezogen auf die Menge des zugeführten Schwefels. Das ist überraschend, da bei den erfindungsgemäß bevorzugten Reaktionstemperaturen der entstandene Schwefelwasserstoff in großem Umfang dissoziiert vorliegt, und auch nach dem Stand der Technik bei den angewendeten Temperaturen nur Ausbeuten von mindestens 50 % zu erwarten gewesen waren.

Die anschließenden Beispiele erläutern das erfindungsgemäße Verfahren.

Beispiel 1

Einem zylindrischen Umsetzungsraum von 15 cm Durchmesser und 100 cm Höhe wurden in gleichmäßigem Strom gasförmig stündlich 0,32 kg (10 mol) Schwefel und 0,23 Normalliter (10,3 mol) Wasserstoff zugeführt. Die Zuführung erfolgte von oben durch zwei koaxial angeordnete Rohre, wobei das innere der Rohre der Zuführung des Schwefels und das äußere der Zuführung des Wasserstoffs diente. Der Schwefel war auf 450 °C vorgewärmt ; die Temperatur des Wasserstoffs betrug 25 °C. Vermischung und Umsetzung erfolgten an den Endöffnungen der Zuführungsrohre in einer Diffusionsflamme bei 875 °C. Im unteren Teil des Umsetzungsraumes wurde das Reaktionsgemisch auf Temperaturen unter 400 °C abgekühlt. Es wurden 85 % des zugeführten Schwefels zu Schwefelwasserstoff umgesetzt.

Beispiel 2

Es wurde wie nach Beispiel 1 verfahren, jedoch wurden je mol Schwefel 1,03 mol Wasserstoff zugeführt. Der Wasserstoff war auf 600 °C vorgewärmt. Die Temperatur der Flamme betrug 1000 °C. Es wurden 95 % des zugeführten Schwefels zu Schwefelwasserstoff umgesetzt.

Beispiel 3

Es wurde wie nach Beispiel 1 verfahren, jedoch wurde der Schwefel und der Wasserstoff in stöchiometrischem Verhältnis zugeführt. Der Wasserstoff war auf 600 °C vorgewärmt. Die Temperatur der Flamme betrug 1025 °C Es wurden 98 % des zugeführten Schwefels zu Schwefelwasserstoff umgesetzt.

**Patentansprüche**

1. Verfahren zur druck- und katalysatorlosen Herstellung von Schwefelwasserstoff, bei dem man geschmolzenen oder gasförmigen Schwefel und Wasserstoff der Reaktionskammer voneinander getrennt in zwei koaxial, angeordneten Rohren zuleitet, an deren Endöffnungen Vermischung und Umsetzung in einer Diffusionsflamme bei Temperaturen zwischen 650 °C und 1300 °C simultan erfolgen und man anschließend das Reaktionsgemisch schnell abkühlt.

2. Verfahren nach Anspruch 1, dadurch gekennzeichnet, daß man den Schwefel durch das innere Rohr und den Wasserstoff durch das äußere Rohr leitet.

**Claims**

1. A process for the production of hydrogen sulfide in the absence of pressure and catalysts, in which molten or gaseous sulfur and hydrogen are fed to the reactor separately from one another in two coaxially arranged tubes, at the end openings of which mixing and reaction take place simultaneously in a diffusion flame at temperatures of from 650 to 1300 °C, after which the reaction mixture is rapidly cooled.

2. A process as claimed in claim 1, characterized in that the sulfur is introduced through the inner tube and the hydrogen through the outer tube.

**Revendications**

1. Procédé pour la préparation d'hydrogène sulfuré sans utilisation de pression, ni de catalyseurs, dans lequel on envoie séparément l'un de l'autre dans la chambre de réaction du soufre fondu ou gazeux et de l'hydrogène dans deux tubes disposés coaxialement, au niveau des orifices terminaux desquels ont lieu simultanément le mélange et la réaction dans une flamme de diffusion, à des températures comprises entre 650 et 1300 °C, et on refroidit ensuite rapidement le mélange réactionnel.

2. Procédé selon la revendication 1, caractérisé en ce que l'on envoie le soufre par le tube interne et l'hydrogène par le tube externe.